(19) **Europäisches Patentamt**

**European Patent Office**

**Office européen des brevets**

(11) Veröffentlichungsnummer: **0 164 376**
**B1**

(12) **EUROPÄISCHE PATENTSCHRIFT**

(45) Veröffentlichungstag der Patentschrift:
25.01.89

(21) Anmeldenummer: **85900082.0**

(22) Anmeldetag: **22.11.84**

(86) Internationale Anmeldenummer:
**PCT/EP 84/00365**

(87) Internationale Veröffentlichungsnummer:
**WO 85/02420 (06.06.85 Gazette 85/13)**

(51) Int. Cl.⁴: **C 25 D  3/38,** C 25 D  7/00,
G 11 B  23/00, G 11 B  3/70

(54) **VERFAHREN ZUR HERSTELLUNG EINES SCHNEIDTRÄGERS.**

(30) Priorität: **23.11.83  DE 3342286**

(43) Veröffentlichungstag der Anmeldung:
**18.12.85 Patentblatt 85/51**

(45) Bekanntmachung des Hinweises auf die Patenterteilung:
**25.01.89 Patentblatt 89/4**

(84) Benannte Vertragsstaaten:
**AT BE CH DE FR GB LI LU NL SE**

(56) Entgegenhaltungen:
**EP-A-0 063 291**

**Journal of Applied Electrochemistry, Vol. 9, 1979,
R.E. Gana et al. "The effect of certain ions on the
internal stress of bright copper electrodeposits",
pages 465-469
Chemical Abstracts, Vol. 90, No. 10, 5 March 1979,
Columbus, Ohio (US), Kato, Akira: "Adaptability of
copper electro-planting method of high
temperatures", see page 206, left-hand column,
abstract 75380r**

(73) Patentinhaber: **DMM Mastertechnik GmbH für
Informationsträger, Finckensteinallee 38, D-1000
Berlin 45 (DE)**

(72) Erfinder: **KNOTHE, Herbert, van- Dyck- Strasse 13,
D-2350 Neumünster (DE)**
Erfinder: **RÖSCHMANN, Klaus, Bekkamp 5, D-2351
Schülp/Ntf (DE)**

(74) Vertreter: **Meyer, Ludgerus A., Patentanwälte
Holländer & Meyer Jungfernstieg 38, D-2000
Hamburg 36 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung eines Schneidträgers, insbesondere für Schallaufzeichnungen, nach dem Oberbegriff des Anspruchs 1.

Es ist bekannt (DE-PS2 811 888 und DE-OS-3 114 131), zur Herstellung von Bild- und Schallplatten, Metallträger mit einer Rillenmodulation zu versehen. Dabei wird zunächst in einem Kupferbad galvanisch eine dünne Schicht aus Kupfer auf ein Substrat aus Aluminium, Edelstahl oder dergl. aufgebracht und die Rillenmodulation anschließend mittels eines über den Metallträger geführten Schneidstichels elektromechanisch in die Schicht aus Kupfer eingeschnitten. Das galvanische Bad ist dabei so bemessen, daß die Schicht aus Kupfer eine Vickershärte zwischen 110 bis 300 hat, weil sich für diesen Härtebereich optimale Schneidfähigkeit ergeben hat. Weicheres Kupfer mit einer Härte von z. B. 90 HV führt zu verschmierten Aufzeichnungen, härtres Kupfer hat einen zu hohen Schneidwiderstand. Eine größere Härte des abgeschiedenen Kupfers wird insbesondere durch organische Badbestandteile wie Glanzzusätze erreicht. Bei dem bekannten Verfahren werden die Glanzzusätze und die Badbedingungen so bemessen, daß sich ein Härtebereich von 160 bis 220 HV ergibt. Dabei wird ein rekristallisierbares Kupfer abgeschieden, daß sich also in einer instabilen Phase befindet. Der Bereich dieser instabilen Phase des Kupfers erstreckt sich von einer durch das Bad vorbestimmten Anfangshärte bis zu einem vom Bad praktisch unabhängigen Mindestwert der Härte. In diesem Bereich hat das Kupfer eine optimale Härte mit gleichzeitiger Duktilität und Verspanungseigenschaften erreicht, die Voraussetzung für ein gutes Schneidverhalten ist. Wenn beim Schneiden der Rillenmodulation in einen solchen Kupferschneidträger der Schneidstichel unter einem Anstellwinkel über die Metalloberfläche geführt wird, der für die jeweilige Kupferbeschaffenheit und die gewünschte Schneidtiefe vorbestimmt ist und z. B. zwischen 10° und 20° liegt, ergibt das bekannte Verfahren einen Kupfermaster, der bei Schallaufzeichnungen einem herkömmlichen Master mit einer Lackaufzeichnung deutlich überlegen ist. Es hat sich nämlich gezeigt, daß gegenüber einer Lackaufzeichnung nicht nur der Ausschuß reduziert wird, sondern zusätzlich noch die Qualität der Aufzeichnung verbessert wird, z. B. der Störabstand um etwa 10 dB. Ferner haben Schallplatten nach der Kupferschnittechnik keine Vor- oder Nachechos, die bei einer herkömmlichen Lackaufzeichnung nicht zu vermeiden waren. Außerdem entfallen praktisch Blasen, Lufteinschlüsse, Lunker oder dergleichen. Für die Herstellung von Metallpositiven oder Negativen, wie z. B. Müttern zur Herstellung der endgültigen Aufzeichnungsträger, ist keine komplizierte Versilberung mehr erforderlich. Der geschnittene Aufzeichnungsträger (Master) ist unbegrenzt lagerfähig, es lassen sich jederzeit weitere Abzüge herstellen.

Es hat sich jedoch gezeigt, daß bei dem soweit beschriebenen Verfahren die für die Qualität und Durchführbarkeit des Schneidvorganges notwendige Rekristallisationsphase des auf dem Substrat abgeschiedenen Kupfers zeitlich begrenzt ist. Diese zeitliche Begrenzung verhindert die an sich erwünschte Lagerhaltung solcher ungeschnitener Kupferschneidträger und verursacht dadurch Schwierigkeiten im Studiobetrieb, weil die Schneidbarkeitsdauer der Kupferschneidträger nach ihrer galvanischen Herstellung relativ kurz ist. Man hat zwar die Dauer der Rekristallisationsphase durch Kühlung der Kupferschneidträger verlängert, doch reicht diese Maßnahme nicht immer aus.

Der Erfindung liegt die Aufgabe zugrunde, die Schneidbarkeitszeit solcher Kupferschneidträger durch andere und ggf zusätzliche Maßnahmen als Kühlung zu verlängern.

Diese Aufgabe wird durch die im Anspruch 1 gekennzeichnete Erfindung gelöst. Weiterbildungen der Erfindung sind in den Unteransprüchen beschrieben.

Im Prinzip wird diese Aufgabe dadurch gelöst, daß dem galvanischem Bad Stoffe zugesetzt werden, die zwar mit in den Niederschlag eingebaut werden, jedoch nicht als Kornverfeinerer oder Härtebildner wirken. Mit Art und Menge, der dieser Erfindung zugrundeliegenden Zusätze wird überwiegend das Rekristallisationsverhalten und nicht die Härte beeinflußt.

Für die Härte der Niederschläge ist zum überwiegenden Teil der Glanzzusatz verantwortlich über den man auch eine für das Schneiden optimale Härte einstellen kann.

Es hat sich als vorteilhaft erwiesen dem Bad Stoffe zuzusetzendie gleichzeitig eine einebnende Wirkung im Niederschlag hervorrufen (sogen. Einebner organischer Art).

Diese Einebner werden fest in das Kupfergefüge eingebaut und verhindern die Bildung großkerniger Kristallite. Weiterhin ist es möglich durch Einbau von Arsen, Antimon und Wismut die Beweglichkeit im Kupfergefüge zu stören, sodaß ebenfalls die Bildung größerer Kristallite, was gleichbedeutend ist mit Rekristallisation, verhindert wird. Auch sind diese Elemente in ihrem Verhalten zu den wanderungsbestrebten Kupferatomen wesentlich stabiler als die organischen Badzusätze. Sie werden weder wie diese umwandert noch durchstoßen.

Für ein galvanisches Bad zur Herstellung eines Schneidträgers mit rekristallisierbarem Kupfer hat sich die Zusammensetzung bewährt, die in der DE-OS-3 114 131 angegeben wird.

Die dort genannten Hinweise gelten auch für das hier beschriebene Verfahren. Darüber hinaus werden dem Bad beispielsweise zugesetzt:

| 0,05 - 0,5 ml/l N,N | Phenylmethylcarbamid methylen diäthyldithiocarbamin ($C_{15} H_{23} N_3 S_3$) Mol.Gew. 341 |
| --- | --- |

| 0,1 - 1 ml/l | Farbstoffe mit kationischen N- Verbindungen |
| --- | --- |

Diese Zusätze bewirken eine Rekristallisationszeitverlängerung von 20 Min, auf 7 Stunden (gemessen bei 100°C) bei gleichbleibender Härte bzw. geringfügiger Härtesteigerung. Bei weiterer Steigerung der Zusätze (Einebner) können Niederschläge erzeugt werden, die nicht mehr rekristallisieren. Ebenso hat sich gezeigt, daß Zusätze von beispielsweise

| 50 - 200 mg/l | Antimonfluorid |
| --- | --- |

eine Verlängerung der Rekristallisationszeit bewirken. Das gleiche gilt für Wismut und Arsen.

## Patentansprüche

1. Verfahren zur Herstellung eines insbesondere für Schallaufzeichnungen bestimmten Schneidträgers mit einer schneidfähigen, auf einem Substrat abgeschiedenen Kupferschicht, die durch die Zusammensetzung des Bades, der Konvektion und der Stromdichte im galvanischen Bad rekristallisierende Eigenschaften aufweist, welches Bad organische Einebnersubstanzen enthält, dadurch gekennzeichnet, daß dem Bad zur Verlängerung der Rekristallisationszeit der auf dem Substrat abgeschiedenen Kupferschicht

a) nur so geringe Mengen von organischen Einebnersubstanzen zugesetzt werden, daß diese Substanzen innerhalb des Kupfergefüges einen so kleinen Anteil an der Kupfermenge haben und so fein verteilt sind, daß keine Kornverfeinerung und keine oder nur geringe Erhöhung der Härte bewirkt wird

b) anorganische Stoffe zugesetzt werden, deren Abscheidungspotentiale dem Kupfer so angepaßt sind, daß nur geringe Mengen dieser anorganischen Stoffe, verglichen mit der Kupfermenge, abgeschieden werden.

2. Verfahren nach Anspruch 1, dadurch gekennzeichnet, daß die anorganischen Stoffe Arsen, Antimon und/oder Wismut enthalten.

3. Verfahren nach Anspruch 1, dadurch gekennzeichnet, daß dem Bad folgende Stoffe zugesetzt werden:

| 0,05 - 0,5 ml/l N,N | Phenylmethylcarbamid methylen diäthyldithiocarbamin ($C_{15} H_{23} N_3 S_3$) Mol.Gew. 341 |
| --- | --- |

| 0,1 - 1- ml/l | Farbstoffe mit kationischen N- Verbindungen. |
| --- | --- |

## Claims

1. Process for the manufacture of a cuttable carrier, especially intended for sound records, comprising a copper layer separated out on a substrate, which layer displays recrystallising properties in the galvanic bath, due to the contents of the bath, the convection and the current density, which bath contains organic smoothing substances, characterized in that to lengthen the recrystallisation time of the copper layer separated out on the substrate

(a) there are added to the bath only such small amounts of organic smoothing substances that these substances make such a small contribution to the amount of copper within the copper texture and are so finely divided that no grain refinement and little or no increase in hardness is effected.

(b) there are added to the bath organic substances whose separation potentials are so suited to the copper that only small amounts of these organic substances are separated out in comparison with the amount of copper.

2. Process according to claim 1, characterized in that the organic substances include antimony, arsenic and/or bismuth.

3. Process according to claim 1, characterized in that the following substances are added to the bath:

| 0.05 - 0.5 ml/N,N | phenylmethylcarbamido-methylenediethyldithio carbamine ($C_{15} H_{23} N_3 S_3$) molecular weight 341 |
| --- | --- |

| 0.1 - 1 ml/1 | Colouring material with cationic N - compounds |
| --- | --- |

## Revendications

1. Procédé pour la production d'un support de gravure, en particulier pour des enregistrements sonores, comportant une couche de cuivre apte à la gravure, déposée sur un support, qui présente des propriétés de recristallisation par la composition du bain, la convection et la densité de courant dans le bain galvanique, lequel bain contient des agents de lissage organiques, caractérisé en ce que, pour l'allongement de la durée de recristallisation de la couche de cuivre déposée sur le support, on ajoute au bain

a) seulement des quantités si faibles de substances de lissage organiques, que ces substances aient, à l'intérieur de la structure du cuivre, une si faible proportion par rapport à la quantité de cuivre et soient si finement divisées qu'elles n'exercent pas d'effet d'affinage du grain et pas d'élévation ou seulement une faible élévation de la dureté,

    b) des substances inorganiques dont les potentiels de séparation sont adaptés au cuivre, de telle sorte qu'il ne se dépose que de faibles quantités de ces substances inorganiques, en comparaison avec la quantité de cuivre.

    2. Procédé selon la revendication 1, caractérisé en ce que les substances inorganiques contiennent de l'arsenic, de l'antimoine et/ou du bismuth.

    3. Procédé selon la revendication 1, caractérisé en ce que l'on ajoute au bain les substances suivantes:

| | |
|---|---|
| 0,05 - 0,5 ml/l | de N,N-phénylméthylcarbamido-méthylène diéthyldithiocarbamine ($C_{15}H_{23}N_3S_3$) poids moléculaire 341 |
| 0,1 - 1 ml/l | de colorants avec N-composés cationiques. |